# EUROPÄISCHE PATENTANMELDUNG

(11) **EP 2 607 122 A2**
(43) Veröffentlichungstag der Anmeldung: **26.06.2013**
(21) Anmeldenummer: 12007389.5
(22) Anmeldetag: 27.10.2012
(51) Int. Cl.: B60J 5/06, B60J 7/10

(54) **Nutzfahrzeug**

(30) Priorität: 19.12.2011 DE 102011121363
(71) Anmelder: Fahrzeugwerk Bernard Krone GmbH, 48480 Spelle (DE)
(72) Erfinder: Bungenberg,Andreas, 48429 Rheine (DE); Irion, Manfred, 49757 Werlte (DE)
(74) Vertreter: Pott, Ulrich

(57) **Zusammenfassung**

Die Erfindung bezieht sich auf einen Nutzfahrzeugaufbau 1 mit einem auf einem Fahrgestell 2 oder einem Grundrahmen abgestützten Laderaumboden 5 sowie mit einem sich oberhalb des Laderaumbodens 5 erstreckenden und von Seitenplanen 9 bereichsweise umgrenzten Laderaum, wobei das Fahrgestell 2 oder der Grundrahmen taschenförmige Ausnehmungen 11 aufweist zum Einführen einer Hebevorrichtung für den Transport des Nutzfahrzeugaufbaus im Huckepack-Verkehr und wobei ein die Seitenplane 9 und das Fahrgestell 2 der den Grundrahmen miteinander verbindendes Sicherungselement 13 als Zollsicherung vorgesehen ist. Um die Seitenplane 9 auch im Bereich oberhalb der taschenförmigen Ausnehmungen 11 zollsicher auszubilden, ist vorgesehen, dass oberhalb einer taschenförmigen Ausnehmung 11 zumindest ein von einer Seitenplane 9 in ihrem mit dem Fahrgestell 2 oder dem Grundrahmen über das Sicherungselement 3 im verbundenen Zustand nach außen hin überdeckte Halterung 17 vorgesehen ist, an der ein mit der Seitenplane 9 verbundenes und ihre mit dem Fahrgestell 2 oder dem Grundrahmen verbundenen Zustand von außen her nicht zugängliches Planensicherungselement 16 festlegbar ist (Fig. 1).

## Beschreibung

Die Erfindung bezieht sich auf einen Nutzfahrzeugaufbau, beispielsweise einen Wechselbehälter als austauschbarern Ladungsträger, für insbesondere einen Sattelauflieger, mit einem auf einem Fahrgestell oder einem abgestützten Laderaumboden sowie mit einem sich oberhalb des Laderaumbodens erstreckenden, von zumindest einer Seitenplane bereichsweise umgrenzten Laderaum, wobei das Fahrgestell oder der Grundrahmen taschenförmige Ausnehmungen aufweist zum Einführen einer Hebevorrichtung für den Transport des Nutzfahrzeugaufbaus im Huckepack-Verkehr und wobei ein die Seitenplane und das Fahrgestell oder den Grundrahmen miteinander verbindendes Sicherungselement als Zollsicherung vorgesehen ist.

Nutzfahrzeuge der vorgenannten Art sind beispielsweise als Sattelauflieger bekannt, die mit einem Fahrgestell mit Radachsen und Rädern ausgebildet sein können. Dieses kann eine Stirnwand haben und heckseitig Türen, wobei zwischen der Stirnwand und den Hecktüren Seitenplanen zur seitlichen Umgrenzung eines Laderaumes vorzusehen sind. Solche Seitenplanen sind mit dem Fahrgestell in aller Regel über zu lösende Gurte zu verspannen, wobei nach Lösen dieser Gurte die Seitenplane beispielsweise gardinenartig geöffnet werden kann.

In zunehmendem Maße ist gefordert, dass solche Nutzfahrzeuge auch für den Huckepack-Verkehr und mithin für den wahlweisen Transport auf der Straße und auf der Schiene auszurüsten sind. Soll ein Transport auf Waggons im Schienenverkehr erfolgen, müssen die Nutzfahrzeuge mittels einer Hebevorrichtung angehoben und auf dem Waggon abgestellt werden. Dazu bedarf es einer besonderen Ausrüstung des Nutzfahrzeuges, wozu in dem Fahrgestell taschenförmige Ausnehmungen zum Einführen von z.B. zangenartigen Greifwerkzeugen der Hebevorrichtung vorzusehen sind. Diese können das Fahrgestell des Nutzfahrzeuges untergreifen, es anheben und auf dem Waggon absetzen.

Parallel ist jedoch auch gefordert, dass eine zollsichere Verbindung einer Seitenplane mit dem Fahrgestell vorzusehen ist über ein Sicherungselement, das eine Zollsicherung aufweist, so dass der Laderaum nur nach Zerstörung einer derartigen Zollsicherung zugänglich ist. Im Bereich der taschenförmigen Ausnehmung ist jedoch im nahegelegenen Bereich und somit auch im Bereich der an diese taschenförmige Ausnehmung angrenzenden Seitenplanenbereich ein Raum freizuhalten, in dem keine Elemente vorzusehen sind, die von der Hebevorrichtung ausgehenden Beschädigungsrisiken ausgesetzt sind. Somit kann in diesem benachbarten Bereich der taschenförmigen Ausnehmung die übliche Zollsicherung nicht vorgesehen werden. Gleichwohl ist jedoch sicherzustellen, dass auch in einer Ausbildung eines Nutzfahrzeuges für den Huckepack-Verkehr im zollgesicherten Zustand kein Risiko besteht, dass ein nicht berechtigter Zugriff zur Ladefläche erfolgen kann.

Es ist daher Aufgabe der vorliegenden Erfindung, einen Nutzfahrzeugaufbau zu schaffen, das auch bei einer Ausbildung für den Huckepack-Verkehr im gesicherten Zustand der Seitenplane mit dem Fahrgestell über das Sicherungselement keine Gefahr besteht, dass ein unberechtigter Zugriff zum Laderaum hin erfolgen kann.

Zur Lösung dieser Aufgabe zeichnet sich der Nutzfahrzeugaufbau der eingangs genannten Art dadurch aus, dass oberhalb einer taschenförmigen Ausnehmung des Fahrgestells eine von einer Seitenplane in ihrem mit dem Fahrgestell über das Sicherungselement verbundenen Zustand nach außen hin überdeckte Halterung vorgesehen ist, an der ein mit der Seitenplane verbundenes Planensicherungselement festlegbar ist.

Damit ist ein Nutzfahrzeugaufbau geschaffen, bei dem im zollgesicherten Zustand der Seitenplane mit dem Fahrgestell über das Sicherungselement ein zusätzliches Planensicherungselement vorgesehen ist, das von der Seitenplane nach außen hin überdeckt ist, so dass es von außen her nicht zugänglich ist.

Solange das Sicherungselement, beispielsweise in Gestalt eines Drahtseiles, die zollsichere Verbindung der Seitenplane mit dem Fahrgestell herstellt, kann die Seitenplane nicht aus ihrem die Halterung für das Planensicherungselement überdeckenden Zustand entfernt werden, so dass das Planensicherungselement und mithin auch die Halterung für unberechtigte Dritte von außen her nicht zugänglich ist. Dies gilt auch, wenn oberhalb der taschenförmigen Ausnehmung ein fensterartiger Bereich in der Plane vorgesehen ist, der von dem Sicherungselement, also beispielsweise dem Drahtseil, umgrenzt wird. Erst nach Lösen des Sicherungselementes kann die Seitenplane von außen her so weit abgehoben werden, dass auch das Planensicherungselement zugänglich ist und gelöst werden kann. Mithin ist ein Nutzfahrzeug geschaffen, das auch in zollsicherer Ausbildung für den Huckepack-Verkehr ausgerüstet werden kann.

Weitere vorteilhafte Ausgestaltungen der Erfindung ergeben sich aus weiteren Unteransprüchen, der nachfolgenden Beschreibung und der Zeichnung. In der Zeichnung zeigen:
Fig. 1 ein Ausführungsbeispeil eines Nutzfahrzeuges nach der Erfindung in Gestalt eines Sattelaufliegers in einer Seitendarstellung;
Fig. 2 vergrößert die Detaildarstellung "A" nach Fig. 1;
Fig. 3 eine zu Fig. 2 analoge Darstellung mit Darstellung eines Rades unter Weglassung der Seitenplane;
Fig. 4 eine Querschnittsdarstellung gemäß der Schnittlinie I-I in Fig. 1, und
Fig. 5 die Detaildarstellung "C" in Fig. 4.

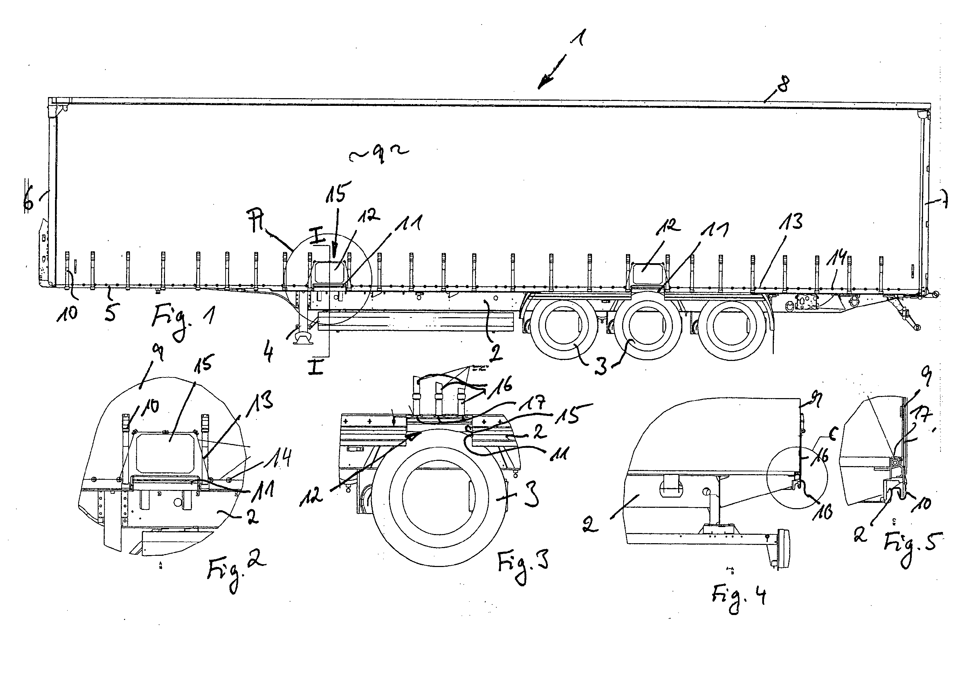

In der Zeichnung sind grundsätzlich übereinstimmende Bauteile mit übereinstimmenden Ziffern versehen. Allgemein mit 1 ist in Fig. 1 das Nutzfahrzeug in Gestalt eines Sattelaufliegers beziffert, das ein Fahrgestell 2 mit Rädern 3 sowie Stützen 4 aufweist. Das Fahrgestell 2 trägt einen allgemein mit 5 bezifferten Laderaumboden, oberhalb dessen sich ein Laderaum erstreckt. Stirnseitig ist dieser Laderaum von einer Vorderwand 6 und heckseitig von Laderaumtüren 7 begrenzt. Oberhalb des Laderaumes erstreckt sich ein Dach 8. Die jeweiligen Seiten sind durch aufschiebbare Seitenplanen 9 begrenzt, die über Spanngurte 10 mit dem Fahrgestell zu verspannen sind. Um das Nutzfahrzeug auch für den Huckepack-Verkehr ausgerüstet zu haben, sind in dem Fahrgestell taschenförmige Ausnehmungen 11 eingelassen zum Einbringen von Hebemitteln einer Hebevorrichtung, beispielsweise zum Einbringen von Greifzangenwerkzeugen. Oberhalb dieser taschenförmigen Ausnehmungen 11 ist im Bereich einer Seitenplane 9 ein fensterartiger Bereich 12 von sonstigen Befestigungsmitteln freizulassen. Dies entspricht den Auflagen, die an ein Huckepack-Fahrzeug zu stellen sind.

Um die Seitenplane mit dem Fahrgestell zollsicher ausgerüstet zu haben, ist ein Zollsicherungselement in Gestalt eines Stahlseiles 13 vorgesehen, das durch entsprechende Ösen 14 und im Einzelnen nicht sichtbare Bügel am Fahrgestell geführt ist. Im Bereich 15 (Detail I in Fig. 1 und näher Fig. 2) begrenzt das Sicherungselement 13 in Gestalt des Zollsicherungsseiles dieses Fenster 15, um diesen Bereich 15 der Seitenplane 9 von den Befestigungselementen freizuhalten. Gleichwohl ist in diesem Bereich 15 die Seitenplane 9 ausgebildet und erstreckt sich bis zu der unteren taschenförmigen Ausnehmung 11. Um sichergestellt zu haben, dass in diesem an das Fahrgestell 2 angrenzenden Bereich der Seitenplane 9 kein unberechtigter Dritter von außen her in den Laderaum greifen kann, sind zusätzliche Planensicherungselemente 16, wie näher aus Fig. 3 hervorgeht, vorgesehen. Dazu sind Halterungen 17 in dem Fahrgestell 2 vorgesehen in Gestalt von langlochartigen Ausnehmungen, in die entsprechende hakenförmige Befestiger der Plansicherungselemente 16 einsetzbar sind.

Ist die Plane 9, wie in Fig. 1 gezeigt, über das Zollsicherungselement 13 mit dem Fahrgestell 2 verbunden, sind diese Plansicherungselemente 16 mitsamt ihren Halterungen 17 von der Plane 9 überdeckt und mithin von außen her nicht zugänglich. Erst nach Lösen des Sicherungselementes 13 kann die Seitenplane 9 so weit angehoben werden, dass auch die Planensicherungselemente 16 gelöst werden können. Die Planensicherungselemente 16 können als Spanngurte ausgebildet sein und in dem fensterartigen Öffnungsbereich an einer seitlichen Leiste des Fahrgestells 2 vorgesehen werden. Wie die Fig. 4 und 5 näher veranschaulichen, sind diese in die Halterungen 17 einzusetzen. Die Halterungen 17 sind nur zu lösen, nachdem im Einzelnen nicht näher dargestellte Verriegelungen, wie z.B. Verriegelungsbolzen entriegelt wurden, was wiederum nur möglich ist nach Entfernen des Sicherungselementes 13. Die Planensicherungselemente 16 sind mit der Plane fest verbunden, beispielsweise durch Verschweißung, Vernähen und dgl.

## Patentansprüche

1. Nutzfahrzeugaufbau (1), beispielsweise Wechselbehälter als austauschbarer Ladungsträger für insbesondere Sattelauflieger, mit einem auf einem Fahrgestell (2) oder Grundrahmen abgestützten Laderaumboden (5) sowie mit einem sich oberhalb des Laderaumbodens (5) erstreckenden und von Seitenplanen (9) bereichsweise umgrenzten Laderaum, wobei das Fahrgestell (2) oder der Grundrahmen taschenförmige Ausnehmungen (11) aufweist zum Einführen einer Hebevorrichtung für den Transport des Nutzfahrzeugaufbaus (1) im Huckepack-Verkehr und wobei ein die Seitenplane (9) und das Fahrgestell (2) miteinander verbindendes Sicherungselement (13) als Zollsicherung vorgesehen ist, **dadurch gekennzeichnet, dass** oberhalb einer taschenförmigen Ausnehmung (11) des Fahrgestells (2) oder des Grundrahmens zumindest ein von einer Seitenplane (9) in ihrem mit dem Fahrgestell (2) oder dem Grundrahmen über das Sicherungselement (13) verbundenen Zustand nach außen hin überdeckte Halterung (17) vorgesehen ist, an der ein mit der Seitenplane (9) verbundenes und in ihrem mit dem Fahrgestell (2) oder dem Grundrahmen verbundenen Zustand von außen her nicht zugängliches Planensicherungselement (16) festlegbar ist.

2. Nutzfahrzeugaufbaunach Anspruch 1, **dadurch gekennzeichnet, dass** das die Seitenplane (9) mit dem Fahrgestell (2) oder dem Grundrahmen verbindende Sicherungselement (13) in dem die Seitenplane mit dem Fahrgestell (2) oder dem Grundrahmen verbundenen Zustand die taschenförmige Ausnehmung (11) mit Höhenabstand fensterartig umgrenzt und dass in dem so gebildeten Fenster (15) der Seitenplane (9) das Planensicherungselement (16) vorgesehen ist.

3. Nutzfahrzeugaufbau nach Anspruch 1 oder 2, **dadurch gekennzeichnet, dass** mehrere mit seitlichem Abstand zueinander vorgesehene Planensicherungselemente (16) mit ihnen zugeordneten Halterungen (17) im Fahrgestell (2) oder dem Grundrahmen vorgesehen sind.

4. Nutzfahrzeugaufbau nach einem der Ansprüche 1 bis 3, **dadurch gekennzeichnet, dass** das Planensicherungselement (16) als Spanngurt ausgebildet ist.

5. Nutzfahrzeugaufbau nach einem der Ansprüche 1 bis 4, **dadurch gekennzeichnet, dass** das Fahrgestell (2) oder dem Grundrahmen eine seitliche Gestellleiste mit Aufnahmen (14) für das Sicherungselement (13) aufweist und die Leiste eine fensterartige Öffnung (15) aufweist, die in dem mit dem Fahrgestell (2) oder dem Grundrahmen verbundenen Zustand der Seitenplane (9) zumindest bereichsweise von dieser überdeckt ist und in dem die Halterung (17) für das Planensicherungselement (16) angeordnet ist.

6. Nutzfahrzeugaufbau nach einem der Ansprüche 1 bis 5, **dadurch gekennzeichnet, dass** die Halterung (17) als Ausnehmung ausgebildet ist, in der das Planensicherungselement (16) festlegbar ist.

7. Nutzfahrzeugaufbau nach einem der Ansprüche 1 bis 6, **dadurch gekennzeichnet, dass** das Planensicherungselement (16) nach Lösen des Sicherungselementes (13) der Seitenplane (9) zugänglich ist.

8. Nutzfahrzeugaufbau nach einem der Ansprüche 1 bis 7, **dadurch gekennzeichnet, dass** ein Planensicherungselement (16) im befestigten Zustand der Seitenplane (9) von dem Sicherungselement (13) übergriffen ist.
